# EUROPEAN PATENT SPECIFICATION

(11) **EP 4 049 207 B1**
(45) Date of publication and mention of the grant of the patent: **17.12.2025**
(21) Application number: 20793803.6
(22) Date of filing: 29.09.2020
(51) Int. Cl.: G06Q 10/0833

(54) **METHOD AND A SYSTEM FOR TRACKING AN ITEM**
VERFAHREN UND SYSTEM ZUR VERFOLGUNG EINES GEGENSTANDES
PROCÉDÉ ET SYSTÈME DE SUIVI D'UN ARTICLE

(30) Priority: 21.10.2019 IN 201911042678
(43) Date of publication of application: 31.08.2022
(73) Proprietor: Carrier Corporation, Palm Beach Gardens, FL 33418 (US)
(72) Inventor: SELVAKANI, Kanna, Hyderabad, Telangana 500081 (IN); MANDA, Suresh, Hyderabad, Telangana 500081 (IN)
(74) Representative: Dehns
(86) International application number: PCT/IB2020/059078
(87) International publication number: WO 2021/079212

(56) References cited:
- US-A1- 2018 122 118
- "Position Location Techniques and Applications", 1 January 2009, ISBN: 978-0-12-374353-4, article DAVID MUNOZ ET AL: "Position Location Techniques and Applications", XP055756505

## Description

### TECHNICAL FIELD OF INVENTION

The present invention generally relates to tracking of items. More particularly, the invention relates to a system and a method for guiding a user to track an item.

### BACKGROUND OF THE INVENTION

In general, several items are packed in a container and the container along with the items are transported from a manufacturer's place to another place or to end customer by various modes of transportation either via sea, air or road or through any such means. Each of the items in the container may be arranged and positioned in a certain way. For an instance, each of the items may be arranged in the container as per a delivery location of the items. Also, each of the items in the container may be also positioned as per requirement of refrigeration depending upon the type of content present inside an item. When the container reaches the delivery location, a delivery person has to manually search and identify the items inside the container for delivering the items.

During transit any item present inside the container may get displaced from its position where the item was originally placed inside the container as per the delivery location or the type of content. Such displacement of the item inside the container may cause confusion for a delivery person and also waste the person's time required for searching the displaced item and may further affect delivery of other items. Currently, a delivery person has to manually remember a position of an item placed inside the container to identify the item for delivery.

In view of the afore-mentioned problems in the existing solutions, there is a need of an efficient and effective system and method for automatically identifying an item present inside a container. There is also a need to automatically identify a displacement of an item inside a container. There is also a requirement to eliminate manual searching of an item placed inside a container. In order to solve problems in the existing solutions, a system and a method are disclosed.

US2018/122118 A1 discloses a system that provides an augmented reality display of an item, for instance a packet, inside a delivery vehicle. The system involves a user computing entity that identifies a tracking identifier for the item from a beacon attached to it, requests item information from a server and retrieves and displays the image of the item in an augmented reality view.

The publication XP055756505, entitled "Position Location Techniques and Applications", David Muñoz et. al., discloses position location techniques according to which a tag may be located using signals received from multiple fixed or mobile beacons, for instance based on angle of arrival of the signals (AOA), time of arrival (TOA) or time difference of arrival (TDOA).

### SUMMARY OF THE INVENTION

Various embodiments of the invention describe a system for guiding a user to track an item. The system of the present invention is defined in claim 1.

In an embodiment of the invention, the location of the item visualized in the virtual reality view detects anomaly associated with the item.

In another embodiment of the invention, the virtual reality view distinguishes the item with the anomaly from other items, wherein the items are placed inside a container. Further, the item is distinguished from the other items by color.

In yet another embodiment of the invention, the location detection unit is adapted to determine the location of the item in three-dimensions, wherein the location includes a global positioning system (GPS) location and a relative spatial location of the item with other items.

In still another embodiment of the invention, the location detection unit is adapted to determine the relative spatial location of the item based on a distinct angle of arrival measured from a plurality of beacons associated with a container.

In a different embodiment of the invention, the signal from the plurality of beacons is utilized to determine the relative spatial location of the item.

In yet another embodiment of the invention, the transmitter of the user device is adapted to transmit a request to the server for enabling the electronic circuit of the item to an alarm.

In another embodiment of the invention, the server transmits the request to the electronic circuit of the item for initiating an alarm.

In an embodiment of the invention, the user device is communicably coupled with the server and is configured to guide the user to the item by showing a path displayed on the interface to access the item.

Various embodiments of the invention describe a method for guiding a user to track an item. The method of the present invention is defined by independent claim 8.

In an embodiment of the invention, the location of the item visualized in the virtual reality view detects anomaly associated with the item.

In another embodiment of the invention, the virtual reality view distinguishes the item with the anomaly from other items, wherein the items are placed inside a container. Further, the item is distinguished from the other items by color.

In yet another embodiment of the invention, the location of the item is determined in three-dimensions, wherein the location includes a global positioning system (GPS) location and a relative spatial location of the item with other items.

In still another embodiment of the invention, the relative spatial location of the item is based on a distinct angle of arrival measured from a plurality of beacons associated with a container.

In a different embodiment of the invention, the signal from the plurality of beacons is utilized to determine the relative spatial location of the item.

In an embodiment of the invention, the user device transmits a request to the server for enabling the electronic circuit of the item to trigger an alarm. Moreover, the user device communicably coupled with a server and is configured to guide the user to the item by showing a path displayed on an interface to access the item.

In a different embodiment of the invention, a computer readable medium is disclosed for guiding a user to track an item. The computer readable medium of the present invention is defined by independent claim 15.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter. Other aspects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

Figure 1A depicts an exemplary system architecture for determining location of an item according to an exemplary embodiment of the invention.
Figure 1B depicts an exemplary system architecture for visualizing location of an item according to an exemplary embodiment of the invention.
Figure 1C depicts an exemplary item with distance/s and height according to an exemplary embodiment of the invention.
Figure 2 depicts block diagram of different components of an electronic circuit coupled with an item according to an exemplary embodiment of the invention.
Figure 3 depicts block diagram of different components of a user device according to an exemplary embodiment of the invention.
Figure 4 depicts an exemplary flowchart illustrating a method to perform the invention according to an exemplary embodiment of the invention.

Corresponding reference numerals indicate corresponding parts throughout the drawings.

### DETAILED DESCRIPTION OF THE INVENTION

Described herein is the technology with a system and a method for guiding a user to track an item. One or more items may be placed/positioned inside a container. Each of the one or more items may determine a location and may transmit the location to a server through a network. A user device may transmit a request to the server for providing the location of an item from the one or more items and in response, may receive the location of the item from the server. Then, the user device may visualize the location of the item in a virtual reality view to guide a user of the user device for tracking the item inside the container.

As used herein, an item may be a holder for holding content and may be made up of metal, plastic, glass, cloth etc. and possess content for consumption or usage by an end customer. Each of the items may have an associated electronic circuit. The electronic circuit of the item may comprise, but is not limited to, a transmitter, a receiver, a location detection unit, one or more sensor/s, a processor, and/or a memory. Such item/s may be a kit, parcel, bag, carton, packet, a box, a bottle or any such item known in the art. The item/s may contain liquid content, solid content or semi solid content or any content known in the art. In an exemplary embodiment, the content of the item/s may be pharmaceutical drugs, drinks, juices, food, accessories, clothes, electronics' articles, lotions, creams, tablets or any such consumer or non-consumer content known in the art.

As used herein, a container may be used for storing, holding or keeping the item/s. The container may communicate with the item/s and/or the server through a network. The container may comprise, but is not limited to, a beacon and an electronic device. The electronic device of the container may perform same operations and functions as performed by the electronic circuit of the item. The electronic device may comprise, but is not limited to, a transmitter, a receiver, a location detection unit, one or more sensor/s, a processor, and/or a memory. Such a container may be a reefer, a box, a receptacle, a storage unit, a cold storage unit or any such unit that is well known in the art.

As used herein, the user device may be a desktop computer or a hand held device such as a mobile phone with network connectivity. Also, a user may be associated with the user device. Further, the user device may be connected with the server or with the container through a network. Examples of the user device may include a stand-alone device, a computer, a desktop, a workstation PC, a laptop, a smart phone, a tablet, a wearable device and the like.

As used herein, the server has processing capabilities as disclosed further in the specification. The server may be a cloud storage, a remote database, or any such storage known in the art.

As used herein, the network may refer to a mesh network, a cellular network (e.g. Global System for Mobile (GSM) network, a Long-Term Evolution (LTE) network, a code-division multiple access (CDMA) network, a narrow-band internet of thing (NB-IoT) technique or category M1 technique)), a short-range network (e.g., a bluetooth network, a Wi-Fi network, or a ZigBee network) or any such network/technique that is known in the art.

Throughout the specification, reference numeral 108 depicts a single item. The reference numerals 108A, 108B, 108C... 108G may be considered as one or more items.

Likewise, throughout the specification, reference numeral 110 depicts a single electronic circuit coupled to an item 108. The reference numerals 110A, 110B, 110C... 110G may be considered as one or more electronic circuits coupled to the one or more items 108.

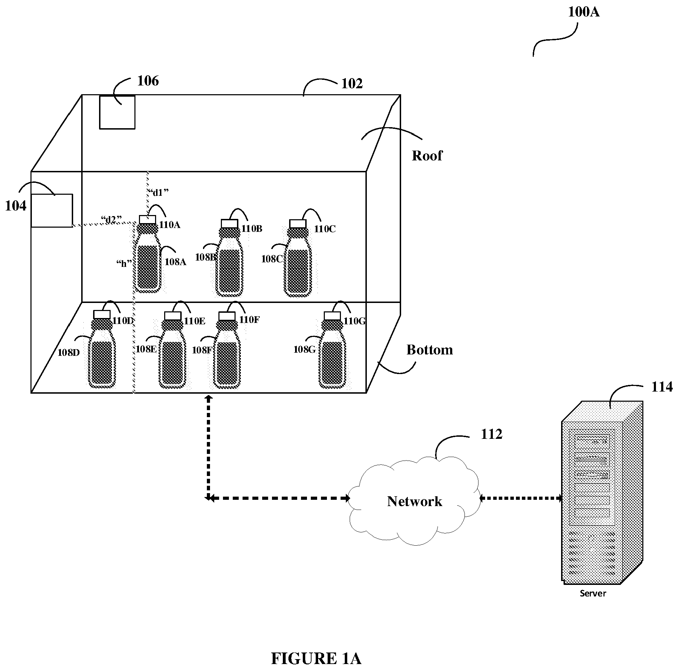

Figure 1A depicts a system architecture 100A for determining a location of an item and transmitting the location of the item to a server, according to an exemplary embodiment of the invention. As depicted in Figure 1A, a container 102, a beacon 104 associated with the container 102, an electronic device 106 coupled with the container 102, one or more items 108A-108G placed inside the container 102, and one or more electronic circuits 110A-110G coupled with the one or more items 108A-108G. As depicted, the container 102 and/or the one or more items 108A-108G may communicate with a server 114 through a network 112. In an exemplary embodiment, the electronic device 106 coupled with the container 102 may perform same functions/operations as performed by the electronic circuit 110.

An electronic circuit 110 coupled with an item 108 may determine a location of the item 108. In an exemplary embodiment, the electronic circuit 110 may determine a location of the item 108 by using a global positioning system (GPS) present in the electronic circuit 110. In another exemplary embodiment, the electronic circuit 110 may determine a relative spatial location of the item 108. The item 108 in the container 102 may determine a relative spatial location three-dimensionally as explained below in details.

The relative spatial location of the item 108 may be determined by using one or more beacons 104 associated with the container 102. The beacon 104 may broadcast signal/s inside the container 102. The signal/s may be in the form of advertisement/s. The electronic circuit 110 may detect the signal/s broadcasted by the beacon 104 and may determine a relative spatial location of the item 108 based on the signal/s from the beacon 104. The relative spatial location of the item 108 may be determined based on a distinct angle of arrival measured from a plurality of beacons 104 associated with the container 102. In particular, the beacon 104 in the container 102 may transmit a special direction-finding signal using an antenna of the beacon 104. The item 108 in the container 102 may have multiple antennae arranged in an array. As the signal transmitted by the beacon 104 crosses the array of the item 108, the item 108 may determine a phase difference of the signal due to the difference in distance from each of the antenna relative to the transmitting antenna of the beacon 104. The electronic circuit 110 coupled with the item 108 may take into consideration IQ (i.e. I = Amplitude*cos(angle), Q = Amplitude*sin(angle)) samples of the signal phase difference while switching between the active antenna in the array. Based on the IQ sample data, the electronic circuit 110 may calculate a relative signal direction. The electronic circuit 110 may identify its distance (d2) from the beacon 104 based on signal strength and the angle of arrival. Further, a height (h) of the item 108 may be calculated using trigonometry to measure remaining distance (d1) of the item 108 from the roof of the container 102. Also, the electronic circuit 110 coupled with the item 108 may identify the relative spatial location by considering total measurements (such as height, width and length) of the container 102 as explained below. The total measurements (such as height, width and length) of the container 102 may be already provided to a server 114 and to the electronic circuit 110 by a manufacturer of the item 108, or the manufacturer of the container 102.

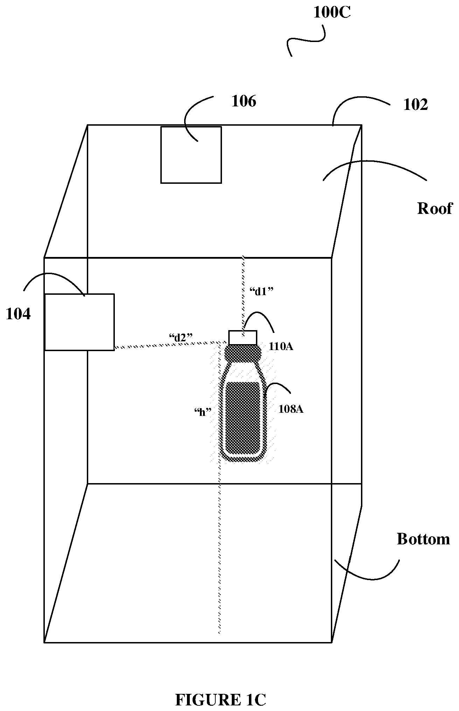

As depicted in Figure 1C, the electronic circuit 110 may utilize the signal/s from the beacon 104 to determine a height ("h") of the item 108 from the bottom of the container 102. Also, the electronic circuit 110 coupled with the item 108 may further utilize the signal/s from the beacon 104 to determine a first distance ("d1") between the item 108 and a roof of the container 102. Further, the electronic circuit 110 may utilize the signal/s from the beacon 104 to determine a second distance ("d2") between the item 108 and the beacon 104. By using the determined height ("h"), the determined first distance ("d1") and/or the determined second distance ("d2"), the electronic circuit 110 coupled with the item 108 may determine its relative spatial location. For an instance, as depicted in Figure 1A, an electronic circuit 110A coupled with an item 108A may determine a height ("h") from bottom of the container 102 up to a place where the electronic circuit 110A of the item 108A is present. Similarly, the electronic circuit 110A coupled with the item 108A may determine a first distance ("d1") between the item 108A and a roof of the container 102. The electronic circuit 110A coupled with the item 108A may also determine a second distance ("d2") between the item 108A and the beacon 104 in the container 102. Based on the height ("h"), the first distance ("d1") the second distance ("d2") and/or a total measurements (such as height, width and length) of the container 102, the electronic circuit 110A coupled with the item 108A in the container 102 may determine a relative spatial location three-dimensionally.

Once the electronic circuit 110 coupled with the item 108 determines the location (i.e. the global positioning system (GPS) location and/or the relative spatial location) in the container 102, the electronic circuit 110 may transmit the location of the item 108 to a server 114 through a network 112. On receiving the location of the item 108, the server 114 may store the location of the item 108. In an exemplary embodiment, the electronic circuit 110 may periodically determine and transmit the location to the server 114 through the network 112. For an instance, the electronic circuit 110 may determine and transmit the location to the server 114 in every 30 minutes. In an exemplary alternative embodiment, the electronic circuit 110 may determine and transmit the location to the server 114 through the network 112 based on an occurrence of an event. For an instance, the electronic circuit 110 may determine and transmit the location to the server 114 when any gesture is made on the container 102 or the item 108 by a user or when the item 108 in the container 102 gets displaced from its original/initial position.

In addition, when any item 108 inside the container 102 gets displaced from an original/initial location or when a location of any item 108 changes during the transit of the container 102, then, the displacement of the item 108 can be identified by comparing a previous angle of arrival of the signal from the beacon 104 with a current angle of arrival of the signal from the beacon 104 to the item 108. Alternatively, the displacement of the item 108 may also be identified by a previous angle of arrival of the signal from the beacon 104 with a threshold limit of angle of arrival defined for a particular item. For an instance, if the current angle of arrival of the signal does not fall within the threshold limit of a 40-degree angle and a 60-degree angle, in such a situation, the item 108 may again transmit a recent/updated location to the server 114.

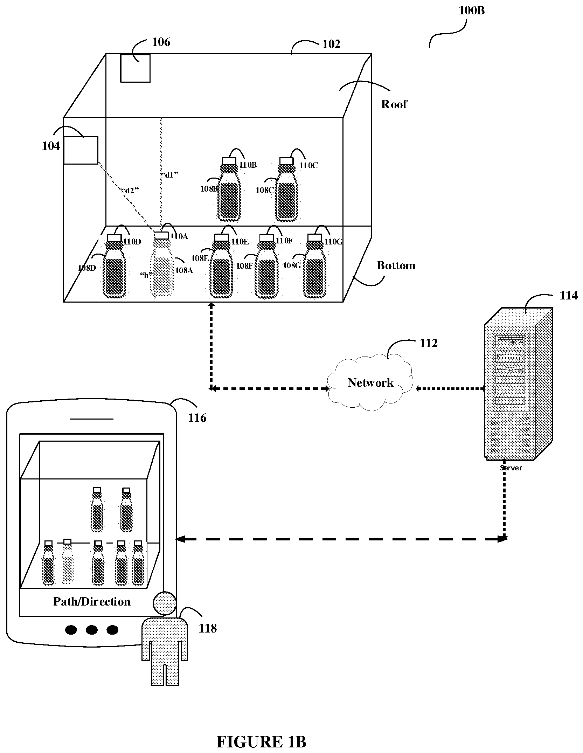

Figure 1B depicts a system architecture 100B for guiding a user to track an item 108, according to an exemplary embodiment of the invention. When a user 118 wishes to identify and track an item 108 inside a container 102, the user 118 may open an application stored in a user device 116. In the application, the user 118 may select an item 108 which the user 118 wishes to identify and track inside the container 102. In an exemplary scenario, the user 118 may wish to identify and track an item 108A inside the container 102. Once the user 118 selects the item 108A in the application, the user 118 may select an option provided in the application to transmit a request to a server 114 through a network. Such a request may be transmitted to the server 114 by the user device 116 for providing a location of the item 108A which the user 118 wishes to track. Along with the request, the user device 116 may also transmit an identifier of the item 108A to the server 114. As used herein, the application may be provided by a delivery provider of the item, a manufacturer of an item, or a manufacturer of a container.

On receiving the request from the user device 116, the server 114 may retrieve the location of the item 108A in the container using the identifier of the item 108A. For this, the server 114 may check a most recent location of the item 108A received from the item 108A as described above in Figure 1A. Once the server 114 may check the most recent location of the item 108A, then the server 114 may transmit the location of the item 108A to the user device 116 through the network. When the user device 116 receives the location of the item 108A, the application in the user device 116 may provide a visualization of the location of the item 108A in a virtual reality view to the user 118. Such a visualization of the location of the item 108A in the virtual reality view may guide the user 118 for tracking the item 108A inside the container 102. The visualization of the location of the item 108A in the virtual reality view may comprise a visual image of the container 102 with the item 108A located at the same location (recent/updated location) in the container 102 where the item 108 is physically placed inside the container 102. Further, the visualization of the location of the item 108A in the virtual reality view may also comprise a virtual path or directions provided to the user 118 in the application to guide the user 118 for tracking the item 108A inside the container 102. In an exemplary embodiment, the virtual path/directions in the virtual reality view may be provided to the user 118 by using arrows (left, right) for guiding the user 118 to track the item 108.

In an exemplary embodiment of the present invention, the visualization of the location of the item 108A in the virtual reality view may also detect an anomaly associated with the item 108A. The anomaly associated with the item 108 may include a displacement of the item 108A from an original location/position (where the item 108A was initially placed) to a new location/position where the item 108A is now placed by means of displacement. Referring back to Figure 1A and considering an example, an item 108A is initially positioned in a first row where an item 108B and an item 108C are also placed. Also, in a second row, an item 108D, an item 108E, an item 108F and an item 108G are positioned. Referring to Figure 1B, as can be seen that the item 108A has been now displaced from the first row (i.e. initial/original position) to the second row (i.e. displaced position) between the item 108D and the item 108E. Such an updated/recent location of the item 108A in the container 102 due to displacement may be transmitted to the server 114 as discussed above in Figure 1A. In such a scenario, when the user 118 requests the location of the item 108A, then the updated/recent location of the item 108A in the container 102 may be transmitted to the user device 116. Then, the application may visualize the updated/recent location of the item 108A in the container 102 to the user 118. Thereby, the present invention provides the technical advantages of easy tracking and identification of the item 108 present inside the container 102 and by providing a virtual/path to the user 118 for identifying the item 108.

Moreover, the virtual reality view may distinguish the item 108A with the anomaly (due to displacement) from other items 108B-108G placed inside the container 102. The item 108A may be distinguished from other items 108B-108G by color. As depicted in Figure 1B, the item 108A is distinguished from other items 108B-108G by color i.e. the item 108A is of grey color and the other item 108B-108G is of black color. Once the item 108A reports the updated/recent location, the server 114 may enable the item 108A to change the color to distinguish from other items 108B-108G in the container 102. Thereby, the present invention provides the technical advantages of identifying and tracking the item 108 with anomaly and enabling an item 108 to change color to distinguish the item 108 with anomaly from other items.

As can also be seen in Figure 1B, the user device 116 may display a visualization of the container 102 along with the updated/recent location of the item 108A (with anomaly) in the virtual reality view and may also provide a visualization of location of other items 108B-108G. By seeing the visualization of the item 108A, the user 118 may easily identify and track the item 108A inside the container 102 as the user 118 has knowledge of the updated/recent location of the item 108A through the visualization. In other embodiment, the user device 116 may provide a visualization of the container 102 along with the updated/recent location of the item 108A (with anomaly) in an augmented reality view.

The present invention also facilitates the application stored in the user device 116 to provide an option to the user 118 for enabling an item 108 to trigger/produce an alarm (for example, to produce a sound or to blink). When the user 118 wishes to track and identify an item 108, the user 118 may select the option in the application for enabling the item 108 to trigger the alarm. When the user 118 selects the option in the application, the user device 116 may transmit a request to the server 114 through the network for enabling the item 108 to trigger the alarm. The server 114 may receive the request from the user device 116 and may transmit a command or the request to the item 108 to trigger the alarm. The item 108 may receive the command/request from the server 114 and then, the item 108 may produce the alarm. In an exemplary embodiment, the item 108 may have one or more light emitting diodes (LEDs) which may start blinking after receiving the command/request from the server 114. In another exemplary embodiment, the item 108 may have a sound buzzer which may produce sound after receiving the command/request from the server 114. By making the item 108 producing the alarm, the user 118 may easily identify and track the item 108 in the container 102. Thereby, the present invention provides the technical advantages of enabling the user 118 to make the item 108 produce an alarm for easy identification.

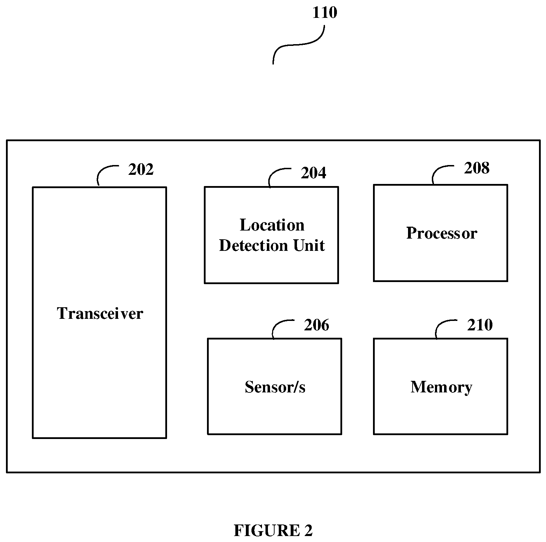

Figure 2 depicts a block diagram of different components of an electronic circuit 110 coupled with an item 108 according to an exemplary embodiment of the invention. The electronic circuit 110 may comprise of, but is not limited to, a transceiver 202, a location detection unit 204, one or more sensors 206, a processor 208 and/or a memory 210. The electronic circuit 110 may also have one or more light emitting diodes (LEDs) and sound buzzer (not shown) as discussed above. The transceiver 202 of the electronic circuit 110 may be adapted to receive signal/s broadcasted by a beacon 104 of a container 102. The location detection unit 204 may be adapted to determine a location of the item 108 based on the signal/s from the beacon 104 of the container 102 or by using a global positioning system (GPS) as explained above in Figure 1A. The location detection unit 204 may transmit the location of the item 108 to the transceiver 202. The one or more sensors 206 may be adapted to sense one or more parameters (such as temperature, humidity, gas etc.) inside a container 102 and may be adapted to communicate sensed parameter/s to the transceiver 202. The transceiver 202 may transmit the location of the item 108 and/or the sensed parameter/s to a server 114 through a network 112. The transceiver 202 of the item 108 may also be adapted to receive a command/request from the server 114 to trigger an alarm (may be to produce sound or to blink). The transceiver 202 may communicate the command/request to the processor 208. The processor 208 of the item 108 may be adapted to trigger the alarm in response to the command/request. The processor 208 of the item 108 may be adapted to change a color of the item 108 to distinguish the item 108 (with an anomaly) from other items in the container 102.

The memory 210 of the electronic device 110 may be adapted to store the location of the item 108, the sensed parameter/s by the item 108 and/or an identifier of the item 108. Moreover, the transceiver 202, the location detection unit 204, the one or more sensors 206, and/or the memory 210 may be communicably coupled with the processor 208. The different units described herein are exemplary. The invention may be performed using one or more units. For example, the tasks executed by the transceiver 202, the location detection unit 204, the one or more sensors 206, the memory 210 and/or the processor 208 may be performed by a single unit. Alternatively, more number of units as described herein may be used to perform the invention.

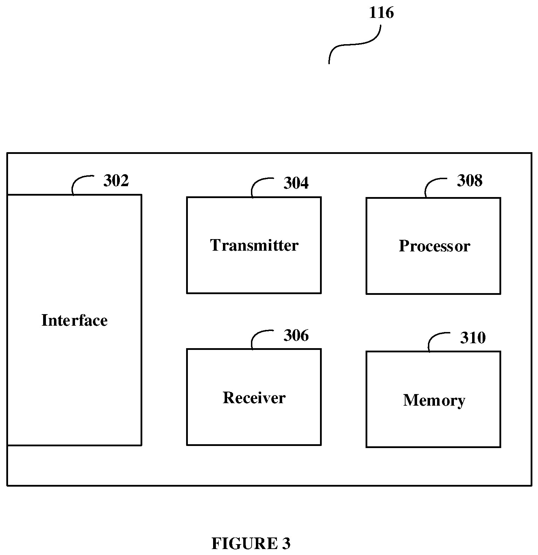

Figure 3 depicts a block diagram of different components of a user device 116 according to an exemplary embodiment of the invention. The user device 116 may comprise of, but is not limited to, an interface 302, a transmitter 304, a receiver 306, a processor 308 and a memory 310. The interface 302 of the user device 116 may be adapted to display an application for a user 118 and may be adapted to enable the user 118 to select an option for transmitting a request to a server 114 for providing location of an item 108. The transmitter 304 of the user device 116 may be adapted to transmit the request to the server 114 for providing location of the item 108. The receiver 306 of the user device 116 may be adapted to receive the location of the item 108 from the server 114. The receiver 306 may also be adapted to communicate the location of the item 108 to the interface 302. The interface 302 of the user device 116 may also be adapted to visualize the location of the item 108 in a virtual reality view to guide the user 118 for tracking the item 108 as explained in Figure 1B above.

The interface 302 of the user device 116 may be adapted to enable the user 118 to select an option for transmitting a command/request to the server 114 for enabling the item 108 to trigger an alarm. The transmitter 304 of the user device 116 may be adapted to transmit the request to the server 114 for enabling the item 108 to trigger the alarm. The memory 310 may be adapted to store an identifier of the item 108, a visualization of the location of the item 108 in a virtual reality view and/or a path/direction for the item 108. Also, the interface 302, the transmitter 304, the receiver 306, and/or the memory 310 may be communicably coupled the processor 308. The different units described herein are exemplary. The invention may be performed using one or more units. For example, the tasks executed by the interface 302, the transmitter 304, the receiver 306, the memory 310 and/or the processor 308 may be performed by a single unit. Alternatively, more number of units as described herein may be used to perform the invention.

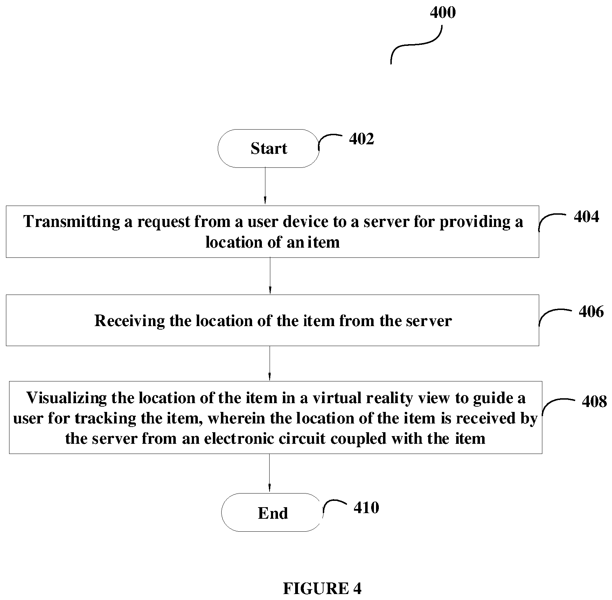

Figure 4 depicts a flowchart outlining the features of the invention in an exemplary embodiment of the invention. The method flowchart 400 describes a method being for guiding a user 118 to track an item 108. The method flowchart 400 starts at step 402.

At step 404, the user device 116 may transmit a request to a server 114 for providing a location of an item 108 which a user 118 wishes to track present inside a container 102. Along with the request, the user device 116 may also transmit an identifier of the item 108 to the server 114. This has been explained in details in Figure 1B above.

At step 406, the user device 116 may receive the location of the item 108A from the server 114 through a network. The location of the item 108A is received by the server 114 from an electronic circuit 110A coupled with the item 108A. This has been explained in details in Figure 1A and Figure 1B above.

At step 408, the user device 116 may provide a visualization of the location of the item 108 in a virtual reality view to the user 118. Such visualization of the location of the item 108 in the virtual reality view may guide the user 118 for tracking the item 108 inside the container 102. The visualization of the location of the item 108 in the virtual reality view may comprise a visual image of the container 102 with the item 108 located at the same location in the container 102 where the item 108 is physically placed inside the container 102. Further, the visualization of the location of the item 108 in the virtual reality view may also comprise a virtual path or directions provided to the user 118 in the application to guide the user 118 for tracking the item 108 inside the container 102. In an exemplary embodiment, the virtual path/directions in the virtual reality view may be provided to the user 118 by using arrows (left, right) for guiding the user 118 to track the item 108. Then, the method flowchart 400 may end at 410.

The present invention is applicable to various fields such as, but not limited to, transportation industry, pharmaceutical industry, cosmetics industry, food industry and any such field that is well known in the art and where an item can be transported and/or utilized.

In one embodiment of the invention, the invention can be operated using the one or more computer readable devices. The one or more computer readable devices can be associated with a user device 116. A computer readable medium comprises one or more processors and a memory coupled to the one or more processors. The one or more processors are configured to transmit a request to a server 114 for providing location of an item 108. The one or more processors are configured to receive the location of the item 108 from the server 114 and visualize the location associated with the item 108 in a virtual reality view to guide a user 118 for tracking the item 108. The location of the item 108 is received by the server 114 from the electronic circuit 110 as described above.

The embodiments of the invention discussed herein are exemplary and various modification and alterations to a person skilled in the art are within the scope of the invention. Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements.

The term "exemplary" is intended to mean "an example of." The phrase "one or more of the following: A, B, and C" means "at least one of A and/or at least one of B and/or at least one of C".

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above.

## Claims

1. A system for guiding a user (118) to track an item (108) placed inside a container (102), the system comprising:
- an electronic circuit (110) configured to be coupled to an item (108) placed inside a container (102), the electronic circuit (110) comprising:
a location detection unit (204) adapted to determine a relative spatial location of the item (108) based on signals from a plurality of beacons (104) associated with the container (102); and
a transceiver (202) adapted to transmit the relative spatial location of the item (108) to a server (114); and
- a user device (116) comprising:
a transmitter (304) adapted to transmit a request to the server (114) for providing the relative spatial location of the item (108);
a receiver (306) adapted to receive the relative spatial location of the item (108) from the server (114); and
an interface (302) adapted to visualize the relative spatial location of the item (108) in a virtual reality view to guide a user (118) for tracking the item (108).

2. The system of claim 1, wherein the relative spatial location of the item (108) visualized in the virtual reality view detects an anomaly associated with the item (108).

3. The system of claim 1, wherein the virtual reality view distinguishes the item (108A) with an anomaly from other items (108B-G), wherein the other items (108B-G) are placed inside the container (102).

4. The system of claim 3, wherein the item (108A) is distinguished from the other items (108B-G) by color.

5. The system of any preceding claim, wherein the location detection unit (204) is adapted to determine the relative spatial location of the item (108A) in three-dimensions, wherein the relative spatial location includes a global positioning system (GPS) location and the relative spatial location of the item (108A) with other items (108B-G).

6. The system of claim 5, wherein the location detection unit (204) is adapted to determine the relative spatial location of the item (108A) based on a distinct angle of arrival of signals measured from the plurality of beacons (104) associated with the container (102).

7. The system of any preceding claim, wherein the user device (116) is communicably coupled with the server (114) and is configured to guide the user (118) to the item (108) by showing a path displayed on the interface (302) to access the item (108).

8. A method for guiding a user (118) to track an item (108) placed inside a container (102), the method comprising:
- (404) transmitting a request from a user device (116) to a server (114) for providing a relative spatial location of an item (108) placed inside a container (102), wherein the relative spatial location of the item (108) is determined based on signals from a plurality of beacons (104) associated with the container (102);
- (406) receiving the relative spatial location of the item (108) from the server (114); and
- (408) visualizing the relative spatial location of the item (108) in a virtual reality view to guide a user (118) for tracking the item (108), wherein the relative spatial location of the item (108) is received by the server (114) from an electronic circuit (110) coupled with the item (108).

9. The method of claim 8, wherein the relative spatial location of the item (108) visualized in the virtual reality view detects an anomaly associated with the item (108).

10. The method of claim 8, wherein the virtual reality view distinguishes the item (108A) with an anomaly from other items (108B-G), wherein the other items (108B-G) are placed inside the container (102).

11. The method of claim 10, wherein the item (108A) is distinguished from the other items (108B-G) by color.

12. The method of any of claims 8 to 11, wherein the relative spatial location of the item (108A) is determined in three-dimensions, wherein the relative spatial location includes a global positioning system (GPS) location and the relative spatial location of the item (108A) with other items (108B-G).

13. The method of any of claims 12, wherein the relative spatial location of the item (108A) is based on a distinct angle of arrival of signals measured from the plurality of beacons (104) associated with the container (102).

14. The method of any of claims 8 to 13, wherein the user device (116) is communicably coupled with the server (114) and is configured to guide the user (118) to the item (108) by showing a path displayed on an interface (302) to access the item (108).

15. A computer readable medium comprising one or more processors (208, 308) and a memory (210, 310) coupled to the one or more processors (208, 308), the memory (210, 310) storing instructions executed by the one or more processors (208, 308), the one or more processors (208, 308) configured to: execute the method of any of claims 8 to 14.

## Patentansprüche

1. System zum Führen eines Benutzers (118) zum Verfolgen eines Gegenstands (108), der in einem Behälter (102) platziert ist, das System umfassend:
eine elektronische Schaltung (110), die konfiguriert ist, um mit einem Gegenstand (108) gekoppelt zu werden, der in einem Behälter (102) platziert ist, die elektronische Schaltung (110) umfassend:
eine Standorterkennungseinheit (204), die geeignet ist, einen relativen räumlichen Standort des Gegenstands (108) basierend auf Signalen von einer Vielzahl von Baken (104), die mit dem Behälter (102) assoziiert sind, zu bestimmen; und
einen Sender-Empfänger (202), der geeignet ist, den relativen räumlichen Standort des Gegenstands (108) an einen Server (114) zu übertragen; und
eine Benutzervorrichtung (116), umfassend:
einen Transmitter (304), der geeignet ist, zum Bereitstellen des relativen räumlichen Standorts des Gegenstands (108) eine Anfrage an den Server (114) zu übertragen;
einen Empfänger (306), der geeignet ist, den relativen räumlichen Standort des Gegenstands (108) von dem Server (114) zu empfangen; und
eine Schnittstelle (302), die geeignet ist, den relativen räumlichen Standort des Gegenstands (108) in einer Virtual-Reality-Ansicht zu visualisieren, um einen Benutzer (118) bei der Verfolgung des Gegenstands (108) zu führen.

2. System nach Anspruch 1, wobei der relative räumliche Standort des in der Virtual-Reality-Ansicht visualisierten Gegenstands (108) eine mit dem Gegenstand (108) assoziierte Anomalie erkennt.

3. System nach Anspruch 1, wobei die Virtual-Reality-Ansicht den Gegenstand (108A) mit einer Anomalie von anderen Gegenständen (108B-G) abgrenzt, wobei die anderen Gegenstände (108B-G) innerhalb des Behälters (102) platziert sind.

4. System nach Anspruch 3, wobei der Gegenstand (108A) durch Farbe von den anderen Gegenständen (108B-G) abgegrenzt ist.

5. System nach einem der vorhergehenden Ansprüche, wobei die Standorterkennungseinheit (204) geeignet ist, den relativen räumlichen Standort des Gegenstands (108A) in drei Dimensionen zu bestimmen, wobei der relative räumliche Standort einen Global-Positioning-System-(GPS-)Standort und den relativen räumlichen Standort des Gegenstands (108A) zu anderen Gegenständen (108B-G) beinhaltet.

6. System nach Anspruch 5, wobei die Standorterkennungseinheit (204) geeignet ist, den relativen räumlichen Standort des Gegenstands (108A) basierend auf einem eindeutigen Ankunftswinkel von Signalen zu bestimmen, die von der Vielzahl von Baken (104), die mit dem Behälter (102) assoziiert sind, gemessen werden.

7. System nach einem der vorhergehenden Ansprüche, wobei die Benutzervorrichtung (116) mit dem Server (114) kommunikativ gekoppelt und konfiguriert ist, um den Benutzer (118) zu dem Gegenstand (108) zu führen, indem ein auf einer Schnittstelle (302) dargestellter Pfad angezeigt wird, um auf den Gegenstand (108) zuzugreifen.

8. Verfahren zum Führen eines Benutzers (118) zum Verfolgen eines in einem Behälter (102) platzierten Gegenstands (108), das Verfahren umfassend:
(404) Übertragen einer Anfrage von einer Benutzervorrichtung (116) an einen Server (114) zum Bereitstellen eines relativen räumlichen Standorts eines Gegenstands (108), der in einem Behälter (102) platziert ist, wobei der relative räumliche Standort des Gegenstands (108) basierend auf Signalen von einer Vielzahl von Baken (104), die mit dem Behälter (102) assoziiert sind, bestimmt wird;
(406) Empfangen des relativen räumlichen Standorts des Gegenstands (108) von dem Server (114); und
(408) Visualisieren des relativen räumlichen Standorts des Gegenstands (108) in einer Virtual-Reality-Ansicht, um einen Benutzer (118) beim Verfolgen des Gegenstands (108) zu führen, wobei der relative räumliche Standort des Gegenstands (108) von dem Server (114) von einer mit dem Gegenstand (108) gekoppelten elektronischen Schaltung (110) empfangen wird.

9. Verfahren nach Anspruch 8, wobei der relative räumliche Standort des in der Virtual-Reality-Ansicht visualisierten Gegenstands (108) eine mit dem Gegenstand (108) assoziierte Anomalie erkennt.

10. Verfahren nach Anspruch 8, wobei die Virtual-Reality-Ansicht den Gegenstand (108A) mit einer Anomalie von anderen Gegenständen (108B-G) abgrenzt, wobei die anderen Gegenstände (108B-G) innerhalb des Behälters (102) platziert sind.

11. Verfahren nach Anspruch 10, wobei der Gegenstand (108A) durch Farbe von den anderen Gegenständen (108B-G) abgegrenzt ist.

12. Verfahren nach einem der Ansprüche 8 bis 11, wobei der relative räumliche Standort des Gegenstands (108A) in drei Dimensionen bestimmt wird, wobei der relative räumliche Standort einen Global-Positioning-System-(GPS-)Standort und den relativen räumlichen Standort des Gegenstands (108A) zu anderen Gegenständen (108B-G) beinhaltet.

13. Verfahren nach einem der Ansprüche 12, wobei der relative räumliche Standort des Gegenstands (108A) auf einem eindeutigen Ankunftswinkel von Signalen basiert, die von der Vielzahl von Baken (104), die mit dem Behälter (102) assoziiert sind, gemessen werden.

14. Verfahren nach einem der Ansprüche 8 bis 13, wobei die Benutzervorrichtung (116) mit dem Server (114) kommunikativ gekoppelt und konfiguriert ist, um den Benutzer (118) zu dem Gegenstand (108) zu führen, indem ein auf einer Schnittstelle (302) dargestellter Pfad angezeigt wird, um auf den Gegenstand (108) zuzugreifen.

15. Computerlesbares Medium, umfassend einen oder mehrere Prozessoren (208, 308) und einen Speicher (210, 310), der mit dem einen oder den mehreren Prozessoren (208, 308) gekoppelt ist, wobei der Speicher (210, 310) Befehle, die von dem einen oder den mehreren Prozessoren (208, 308) ausgeführt werden, speichert, wobei der eine oder die mehreren Prozessoren (208, 308) konfiguriert sind, um das Verfahren nach einem der Ansprüche 8 bis 14 auszuführen.

## Revendications

1. Système permettant de guider un utilisateur (118) pour suivre un article (108) placé à l'intérieur d'un conteneur (102), le système comprenant :
- un circuit électronique (110) configuré pour être couplé à un article (108) placé à l'intérieur d'un contenant (102), le circuit électronique (110) comprenant :
une unité de détection de position (204) adaptée pour déterminer la position spatiale relative de l'article (108) sur la base des signaux provenant d'une pluralité de balises (104) associées au conteneur (102) ; et
un émetteur-récepteur (202) adapté pour transmettre la position spatiale relative de l'article (108) à un serveur (114) ; et
- un dispositif utilisateur (116) comprenant :
un transmetteur (304) adapté pour transmettre une requête à un serveur (114) pour la fourniture de la position spatiale relative de l'article (108) ;
un récepteur (306) adapté pour recevoir la position spatiale relative de l'article (108) du serveur (114) ; et
une interface (302) adaptée pour visualiser la position spatiale relative de l'article (108) dans une vue de réalité virtuelle pour guider un utilisateur (118) pour suivre l'article (108).

2. Système selon la revendication 1, dans lequel la position spatiale relative de l'article (108) visualisée dans la vue de réalité virtuelle détecte une anomalie associée à l'article (108).

3. Système selon la revendication 1, dans lequel la vue de réalité virtuelle distingue l'article (108A) présentant une anomalie des autres articles (108B-G), dans lequel les autres articles (108B-G) étant placés à l'intérieur du conteneur (102).

4. Système selon la revendication 3, dans lequel l'article (108A) se distingue des autres articles (108B-G) par la couleur.

5. Système selon une quelconque revendication précédente, dans lequel l'unité de détection de position (204) est adaptée pour déterminer la position spatiale relative de l'article (108A) en trois dimensions, dans lequel la position spatiale relative comporte une localisation par système de positionnement global (GPS) et la position spatiale relative de l'article (108A) avec d'autres articles (108B-G).

6. Système selon la revendication 5, dans lequel l'unité de détection de position (204) est adaptée pour déterminer la position spatiale relative de l'article (108A) sur la base d'un angle d'arrivée distinct des signaux mesurés à partir de la pluralité de balises (104) associées au conteneur (102).

7. Système selon une quelconque revendication précédente, dans lequel le dispositif utilisateur (116) est couplé de manière communicative au serveur (114) et est configuré pour guider l'utilisateur (118) vers l'article (108) en montrant un chemin affiché sur l'interface (302) pour accéder à l'article (108).

8. Procédé permettant de guider un utilisateur (118) pour suivre un article (108) placé à l'intérieur d'un conteneur (102), le procédé comprenant :
- (404) la transmission d'une requête d'un dispositif utilisateur (116) à un serveur (114) pour la fourniture d'une position spatiale relative d'un article (108) placé à l'intérieur d'un conteneur (102), dans lequel la position spatiale relative de l'article (108) est déterminée sur la base de signaux provenant d'une pluralité de balises (104) associées au conteneur (102) ;
- (406) la réception de la position spatiale relative de l'article (108) du serveur (114) ; et
- (408) la visualisation de la position spatiale relative de l'article (108) dans une vue de réalité virtuelle pour guider un utilisateur (118) pour suivre l'article (108), dans lequel la position spatiale relative de l'article (108) est reçue par le serveur (114) à partir d'un circuit électronique (110) couplé à l'article (108).

9. Procédé selon la revendication 8, dans lequel la position spatiale relative de l'article (108) visualisée dans la vue de réalité virtuelle détecte une anomalie associée à l'article (108).

10. Procédé selon la revendication 8, dans lequel la vue de réalité virtuelle distingue l'article (108A) présentant une anomalie des autres articles (108B-G), dans lequel les autres articles (108B-G) sont placés à l'intérieur du conteneur (102).

11. Procédé selon la revendication 10, dans lequel l'article (108A) se distingue des autres articles (108B-G) par la couleur.

12. Procédé selon l'une quelconque des revendications 8 à 11, dans lequel la position spatiale relative de l'article (108A) est déterminée en trois dimensions, dans lequel la position spatiale relative comporte une localisation par système de positionnement global (GPS) et la position spatiale relative de l'article (108A) avec d'autres articles (108B-G).

13. Procédé selon l'une quelconque des revendications 12, dans lequel la position spatiale relative de l'article (108A) est basée sur un angle d'arrivée distinct des signaux mesurés à partir de la pluralité de balises (104) associées au conteneur (102) .

14. Procédé selon l'une quelconque des revendications 8 à 13, dans lequel le dispositif utilisateur (116) est couplé de manière communicative au serveur (114) et est configuré pour guider l'utilisateur (118) vers l'article (108) en montrant un chemin affiché sur l'interface (302) pour accéder à l'article (108).

15. Support lisible par ordinateur comprenant un ou plusieurs processeurs (208, 308) et une mémoire (210, 310) couplée au ou aux processeurs (208, 308), la mémoire (210, 310) stockant des instructions exécutées par le ou les processeurs (208, 308), le ou les processeurs (208, 308) étant configurés pour : exécuter le procédé selon l'une quelconque des revendications 8 à 14.
